(19) Europäisches Patentamt
European Patent Office
Office européen des brevets

(11) Veröffentlichungsnummer: **0 012 434**
**B1**

(12) # EUROPÄISCHE PATENTSCHRIFT

(45) Veröffentlichungstag der Patentschrift: **09.02.83**

(51) Int. Cl.³: **B 32 B 27/06**, B 32 B 27/00

(21) Anmeldenummer: **79105141.0**

(22) Anmeldetag: **13.12.79**

(54) **Verbund-Formkörper, enthaltend Mischpolymerisate des Tetrafluoräthylens mit alpha-Olefinen und Verfahren zu deren Herstellung.**

(30) Priorität: **19.12.78 DE 2854787**

(43) Veröffentlichungstag der Anmeldung: **25.06.80 Patentblatt 80/13**

(45) Bekanntmachung des Hinweises auf die Patenterteilung: **09.02.83 Patentblatt 83/6**

(84) Benannte Vertragsstaaten: **AT CH DE FR GB IT SE**

(56) Entgegenhaltungen:
**DE-A-2 647 388**
**GB-A-834 170**
**GB-A-1 255 493**
**US-A-3 579 370**

(73) Patentinhaber: **HOECHST AKTIENGESELLSCHAFT, Postfach 80 03 20, D-6230 Frankfurt/Main 80 (DE)**

(72) Erfinder: **Fitz, Herbert, Dr., Kantstrasse 41, D-8261 Burgkirchen/Alz (DE)**

**EP 0 012 434 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verbund-Formkörper, enthaltend Mischpolymerisate des Tetrafluoräthylens mit α-Olefinen und Verfahren zu deren Herstellung

Die Erfindung betrifft ein Verfahren zur Herstellung von Verbunden aus Formkörpern, welche aus Mischpolymerisaten, bestehend aus Tetrafluoräthylen-Einheiten, Einheiten von α-Olefinen und gegebenenfalls Einheiten anderer Monomerer, hergestellt worden sind, untereinander oder aber von solchen Formkörpern mit Formkörpern aus anderen Materialien mittels einer Zwischenschicht und die derart hergestellten Verbund-Formkörper.

Mischpolymerisate von Tetrafluoräthylen mit α-Olefinen, wie insbesondere die Mischpolymerisate aus Tetrafluoräthylen (TFE) und Äthylen (ET), gegebenenfalls aus kleinen Mengen mit diesen Monomeren copolymerisierbarer anderer Monomerer sind seit längerem bekannt, beispielsweise aus den US-Patentschriften 2 468 664, 2 479 367, 3 528 954, 3 624 250 und 3 859 262 oder aus den deutschen Offenlegungsschriften 1 770 440, 1 813 784, 2 233 288 und 2 444 516. Bekannte Produkte dieser Gruppe sind TEFZEL® der Firma DuPont de Nemours and Co., AFLON® COP der Firma Asahi Glass oder Hostaflon® ET der Firma Hoechst AG. Mischpolymerisate dieser Gruppe besitzen ebenso wie andere Fluorpolymere eine Reihe von wertvollen Eigenschaften, wie hohe Temperatur-, Lösungsmittel- und Chemikalienbeständigkeit, eine extrem hohe Wetterbeständigkeit, Schwerentflammbarkeit und insbsondere antiadhäsives Verhalten. Während das Polytetrafluoräthylen wegen seiner extrem hohen Schmelzviskosität nicht nach üblichen thermoplastischen Verarbeitungsmethoden verformt werden kann, sondern nur nach Formgebungsmethoden, die denen der Pulvermetallurgie ähnlich sind, besitzen die obengenannten Mischpolymerisate aus Tetrafluoräthylen, α-Olefinen und gegebenenfalls weiteren Monomeren ebenso wie andere Mischpolymerisate des Tetrafluoräthylens diesen Nachteil nicht. Sie können nach üblichen thermoplastischen Formgebungsmethoden, wie beispielsweise Extrudieren, Kalandrieren usw. zu Formkörpern verarbeitet werden. Das antiadhäsive Verhalten, welches bedingt durch die außergewöhnlich niedrige Oberflächenspannung, eine Eigenschaft aller aus Fluorpolymeren geformter Körper ist, verhindert jedoch in nachteiliger Weise die direkte Herstellung von Verbunden oder Schichtkörpern und damit die wertvolle Kombination solcher Formkörper untereinander oder auch mit anderen Werkstoffen auf Basis organischer oder anorganischer Stoffe.

So ist beispielsweise bisher kein Klebstoff gefunden worden, der in ausreichender Weise das direkte Verkleben von Polytetrafluoräthylen ohne chemische Vorbehandlung gestattet.

Unter Verkleben im hier gebrauchten Sinn soll das Verbinden mit Hilfe einer Zwischenschicht verstanden werden, die als Lösung oder Dispersion aufgebracht und mit Hilfe derer der Verbund bei Raumtemperatur oder nur geringem Erwärmen hergestellt wird, ohne daß diese Zwischenschicht aufgeschmolzen werden muß. Im Gegensatz dazu muß bei dem bekannten Verschweißen von Fluorpolymeren-Formkörpern die Zwischenschicht in Substanz zum Schmelzpunkt erhitzt und dabei unter Anwendung von Druck der Verbund hergestellt werden.

Ebenso ist es bisher auch nicht gelungen, Formkörper aus Mischpolymerisaten des Tetrafluoräthylens mit α-Olefinen und gegebenenfalls dritten Monomeren, insbesondere solchen des Tetrafluoräthylens mit Äthylen und gegebenenfalls drittten Monomeren, direkt ohne chemische Vorbehandlung der Oberflächen zu verkleben und damit Verbunde herzustellen.

In der DE-A-2 354 210 ist ein Verfahren beschrieben worden, bei dem durch chemische Vorbehandlung der Oberflächen von Formkörpern aus Mischpolymerisaten von Fluorolefinen und α-Olefinen eine aktivierte Oberfläche geschaffen wird, die dann nach konventionellen Methoden verklebt oder laminiert werden kann. Das dort beschriebene Verfahren, das ausgezeichnete Ergebnisse liefert, hat jedoch in der Praxis zwei Nachteile: einerseits ist es praktisch sehr schwierig — beispielsweise bei Einsatz von Folien — in geeigneter Weise im Temperaturbereich von 180 bis 250°C eine Behandlung mit Alkalischmelzen einschließlich der erforderlichen Nachbehandlung (wie Waschen und Trocknen) durchzuführen und so die Oberfläche zu aktivieren, andererseits bringt die Schaffung einer ca. 1 µm dicken aktivierten Oberflächenschicht eine Reihe von Problemen mit sich. So ist es beispielsweise nicht möglich, mittels transparenter Folien aus den genannten Mischpolymerisaten auf Substraten, wie Folien, Platten oder Geweben, dauerhafte Überzüge für den Außeneinsatz zu schaffen, da die durch die TFE/ET-Polymerfolie hindurchgehende Strahlung die aktivierte Schicht zerstören und damit die Haftung zunichte machen kann. Auch bei gleichzeitigem Angriff von erhöhter Temperatur und Sauerstoff (Luft) kann dieser Effekt eintreten.

Ein weiterer Nachteil ist die bräunlich-schwarze Eigenfarbe der aktivierten Schichten, die sich dann störend bemerkbar macht, wenn es darum geht, Verbunde mit eingefärbten Substraten herzustellen, wobei diese durch die Deckschicht möglichst farbtontreu wiedergegeben werden soll.

In der DE-A-2 647 388 wird ein Verfahren zum Auflaminieren eines Fluorkohlenstoffharz-Films auf Aluminiumoberflächen beschrieben, bei dem die Aluminiumoberfläche nach Anätzen zunächst mit einer wäßrigen Fluorkohlenstoffharz-Dispersion beschichtet und diese Schicht getrocknet wird. Danach wird der genannte Film durch Heißpressen auf die aus dem dispergierten Harz erzeugte Schicht aufgebracht. Als Fluorkohlenstoffharze werden Tetrafluorethylen/Hexafluorpropylen-Mischpolymerisat und Polyvinylidenfluorid genannt, bevorzugt soll wegen seiner Hitzbeständigkeit Polytetrafluorethylen sein. Damit werden — wegen deren geringerer Wärmebeständigkeit — weder Fluorcarbon-Elastomere angesprochen noch wird in dieser Schrift auf das Verbinden von Formteilen, bestehend aus Mischpolymerisaten des Typs Tetrafluorethylen/$\alpha$-Olefin, Bezug genommen.

Es besteht daher ein Bedürfnis nach einem Verfahren, das die Herstellung von Verbund-Formkörpern aus solchen Mischpolymerisaten aus Tetrafluoräthylen und $\alpha$-Olefinen, gegebenenfalls unter Einschluß dritter Monomerer, auf direktem Wege möglichst ohne vorherige Aktivierung der Oberfläche gestattet. Ein solches Bedürfnis besteht auch insbesondere deswegen, da das bekannte Verschweißen mittels Zwischenschichten von thermoplastischen Fluorpolymeren auf Gebilde mit komplizierten Raumformen nicht anwendbar ist und außerdem nicht beim Verbinden mit solchen Materialien eingesetzt werden kann, die die notwendigen Verschweißungstemperaturen nicht vertragen.

Diesem Bedürfnis wird gemäß der vorliegenden Erfindung Rechnung getragen durch ein Verfahren zur Herstellung von Verbunden aus Formkörpern, welche aus Mischpolymerisaten, bestehend aus Tetrafluoräthylen-Einheiten, Einheiten von $\alpha$-Olefinen und gegebenenfalls Einheiten anderer Monomerer geformt worden sind, untereinander oder von solchen Formkörpern mit Formkörpern aus anderen Materialien mit Hilfe einer Zwischenschicht, das dadurch gekennzeichnet ist, daß die Zwischenschicht aus einem elastomeren Mischpolymerisat, bestehend aus 90 bis 40 Mol-% Vinylidenfluorid-Einheiten, 5 bis 60 Mol-% Hexafluorpropylen-Einheiten und 0 bis 35 Mol-% Einheiten eines oder mehrerer anderer Monomerer, in Form einer Lösung oder Dispersion in einem flüssigen Medium auf die Oberfläche der zu verbindenden Formkörper aufgebracht, das flüssige Medium entfernt und, gegebenenfalls unter niedrigem Preßdruck, der Verbund hergestellt wird.

Die im Rahmen dieses erfindungsgemäßen Verfahrens als verklebende Zwischenschicht benutzten Mischpolymerisate aus Vinylidenfluorid (VDF), Hexafluorpropylen (HFP) und gegebenenfalls zusätzlichen dritten und vierten Monomeren sind seit längerem bekannt und beispielsweise unter den Warenzeichen VITON® (Hersteller E. I. DuPont de Nemours and Co.) oder FLUOREL® (Hersteller Minnesota Mining and Manufacturing Co.) im Handel. Die Herstellung und die Eigenschaften dieser Mischpolymerisate sind zum Beispiel beschrieben in der US-PS 3 051 677, in Ind. Engng. Chem. 49 (1957), 1687 bis 1690 und in Werkstoffe und Korrosion, 13 (1962), 337 bis 340. Diese Mischpolymerisate, wie sie im Rahmen des erfindungsgemäßen Verfahrens eingesetzt werden, enthalten 90 bis 40, vorzugsweise 85 bis 50, insbesondere 80 bis 55 Mol-% VDF-Einheiten und 5 bis 60, vorzugsweise 5 bis 50, insbesondere 5 bis 45 Mol-% HFP-Einheiten, falls noch modifizierende Monomereinheiten zugegen sind (im Falle des Bipolymeren VDF/HFP errechnet sich der HFP-Anteil aus den Mol-%-Anteilen von VDF gegen 100).

Die elastomeren Mischpolymerisate können, außer diesen beiden Hauptkomponenten, ferner noch Einheiten anderer mischpolymerisierbarer Monomerer, die der Modifizierung dieser Mischpolymerisate dienen, enthalten. Diese Monomeren sind vorzugsweise ausgewählt aus folgenden Gruppen:
Perfluorierte Olefine mit 2 oder 4 C-Atomen, insbesondere Perfluorisobutylen und speziell bevorzugt Tetrafluoräthylen; teilfluorierte, gegebenenfalls mit Brom und vorzugsweise Chlor zusätzlich substituierte Olefine mit 2 bis 4 C-Atomen (mit Ausnahme des VDF), wie Pentafluorpropylen und vorzugsweise Vinylfluorid und Trifluorchloräthylen; fluorhaltige Vinyläther der Formel $CF_2=CF-OR$, worin R ein Perfluoralkyl-, Fluoralkyl- oder Alkylrest mit 1 bis 4 C-Atomen oder der Phenylrest ist, bevorzugt Perfluor(propylvinyl)äther. Außer diesen fluorierten Monomeren kommen als modifizierende Komponente auch fluorfreie Monomere in Betracht, beispielsweise Olefine wie insbesondere solche mit 2 bis 4 C-Atomen (Äthylen etc.), Vinylverbindungen wie insbesondere Acrylsäure, Methacrylsäure und deren Alkylester mit 1 bis 3 C-Atomen.

Es können als modifizierende Komponente Einheiten von einem, aber auch von mehreren, insbesondere von zwei der vorgegenannten Monomeren zugegen sein, das heißt, das elastomere Mischpolymerisat kann ein Quater- oder Terpolymerisat sein.

Solche weiteren Monomeren sind als Einheiten in den genannten Mischpolymerisaten in Mengen von 0 bis 35 Mol-%, vorzugsweise in Mengen von 0,1 bis 30 Mol-% enthalten.

Besonders bevorzugt sind neben denjenigen Mischpolymerisaten, die ausschließlich VDF und HFP enthalten, solche, die daneben noch bis zu 30 Mol-% Einheiten des Tetrafluoräthylens und/oder eines Perfluor(alkylvinyl)äthers der Formel

$$CF_2=CF-O-R,$$

worin R ein Perfluoralkylrest mit 1 bis 4, vorzugsweise 3 C-Atomen ist, enthalten. TFE enthaltende elastomere Mischpolymerisate zeichnen sich durch besonders gute Wärme- und Chemikalienbeständigkeit aus.

Die Herstellung solcher elastomererer Mischpolymerisate, die neben VDF und HFP noch andere Monomereneinheiten enthalten, ist beispielsweise beschrieben in den US-Patentschriften 2 968 649, 3 080 347 und 3 235 537 sowie in den deutschen Offenlegungsschriften 2 454 851, 2 457 102 und 2 635 402.

Diese erfindungsgemäß eingesetzten elastomeren Mischpolymerisate können aus Lösungen in organischen Lösungsmitteln aufgebracht werden. Wird nach einer bevorzugten Form des erfindungsgemäßen Verfahrens unter Einsatz

von Lösungen gearbeitet, so sind naturgemäß gut lösende Lösungsmittel für die als Klebeschicht verwendeten elastomeren Mischpolymerisate erforderlich. Besonders gut geeignet sind Ketone wie Aceton, Methyläthylketon, Isobutyläthylketon, Ester wie Äthyl- oder Methylacetat oder Mischungen untereinander oder anderen Lösungsmitteln.

Die anzuwendende Konzentration der eingesetzten elastomeren Mischpolymerisate ist nicht kritisch und kann bei Lösungen im Bereich von etwa 5 bis 25 Gew.-% liegen.

Ferner können die genannten Mischpolymerisate aus VDF, HFP und gegebenenfalls weiteren Monomeren auch als wäßrige Dispersionen eingesetzt werden. Die Herstellung solcher wäßriger Dispersionen ist beschrieben in der US-PS 3 051 677 (siehe Spalte 2, Zeile 68 und Beispiel 8). Zweckmäßigerweise sollen solche wäßrigen Dispersionen Feststoffgehalte an elastomerem Mischpolymerisat von etwa 40 bis 60 Gew.-% besitzen.

Zur Erzielung eines besonders innigen Verbundes ist es sehr zweckmäßig, den im Rahmen des erfindungsgemäßen Verfahrens eingesetzten elastomeren Mischpolymerisaten ein Vernetzungsmittel zuzusetzen. Derartige Vernetzungsmittel sind insbesondere Peroxide, wie beispielsweise Benzoylperoxid, Di-tert.-butylperoxid, Dilaurylperoxid, Cyclohexanonperoxid, tert.-Butylhydroperoxid und Dibernsteinsäureperoxid, ferner auch Amine oder Polyamine wie beispielsweise Propylamin, Tri-n-amylamin, Äthylendiamin, Hexamethylendiamin, Hexamethylentetramin, 1.3-Diaminocyclohexan oder Naphthalindiamin. Andere in Frage kommende Vernetzungsmittel sind beispielsweise Dimercaptane wie Hexamethylendithiol, Äthylendithiol oder Tetramethylenthiol.

Bei den gebräuchlichen Arbeiten mit Vernetzungssystemen wird bei Temperaturen um 100 bis 250°C — abhängig von dem verwendeten System — gearbeitet.

Diese Techniken sind hinreichend aus der Literatur bekannt.

Beispielsweise wird eine eingehende Zusammenstellung darüber in der Veröffentlichung »Processing and fabrication of a high-temperature fluid-resistant fluorocarbon elastomer«, Ind. Engng. Chem., Prod. Res. Devel. 3 (1964) No. 1, 61—67 gegeben. Bei empfindlichen Substraten, beispielsweise bei Materialien wie Polyvinylchlorid oder Polyäthylen kann auch ein Vernetzen bei Raumtemperatur erfolgen, wie es in der US-PS 3 041 316 beschrieben wird.

Zusätzlich können den als Zwischenschicht eingesetzten elastomeren Mischpolymerisaten auch weitere Zusätze wie Vernetzungsbeschleuniger, Stabilisatoren, Füllstoffe und Pigmente zugefügt werden.

Die mit Hilfe des erfindungsgemäßen Verfahrens zu verbindenden Formkörper bestehen aus Mischpolymerisaten des Tetrafluoräthylens mit $\alpha$-Olefinen, insbesondere solchen $\alpha$-Olefinen mit 2 bis 4 C-Atomen oder deren Gemischen, also Propylen, Butylen, Isobutylen und vorzugsweise Äthylen. Die Herstellung solcher Mischpolymerisate ist aus den weiter oben genannten Veröffentlichungen bekannt. Sie bestehen aus 65 bis 35, vorzugsweise 60 bis 40 Mol-% Einheiten des Tetrafluoräthylens und 35 bis 65, vorzugsweise 40 bis 60 Mol-% Einheiten des oder der genannten $\alpha$-Olefine, insbesondere des Äthylens. Gegebenenfalls können diese Mischpolymerisate auch noch weitere (dritte und vierte) Monomere in untergeordneter Menge enthalten, und zwar vorzugsweise fluorhaltige Monomere. Beispielsweise seien hier genannt perfluorierte Olefine wie Hexafluorpropylen und Perfluorisobutylen und insbesondere Perfluor(alkylvinyl)-äther der Formel

$$ROCF{=}CF_2,$$

worin R einen Perfluoralkylrest mit 1 bis 4 C-Atomen bedeutet, vorzugsweise Perfluor(propylvinyl)-äther, aber auch Äther der gleichen Formel, in denen R einen teilfluorierten oder nichtfluorierten Alkylrest bedeutet. Weitere modifizierende — auch nichtfluorierte — Comonomere dieser Art sind insbesondere Vinylester, beispielsweise Vinylacetat oder Vinylpropionat oder fluorierte oder nichtfluorierte Acrylsäure und Methacrylsäure sowie deren Ester. Diese modifizierenden Comonomeren, die auch in Form von Gemischen anwesend sein können, liegen in den genannten Mischpolymerisaten aus Tetrafluoräthylen und $\alpha$-Olefinen in einem Anteil von 0 bis 10 Mol-%, vorzugsweise von 0 bis 5 Mol-%, vor. Diese Formkörper können auch bekannte Zusätze, wie z. B. Füllstoffe oder Pigmente enthalten.

Formkörper aus diesen genannten Mischpolymerisaten können mit Hilfe des erfindungsgemäßen Verfahrens entweder mit solchen aus Mischpolymerisaten der gleichen Gruppe verklebt werden, ebenso ist das erfindungsgemäße Verfahren aber auch anwendbar zur Herstellung von Verbunden von Formkörpern aus diesen genannten Mischpolymerisaten und Partnern aus anderen anorganischen, organischen oder polymeren Materialien. Unter diesen sind beispielsweise zu nennen Formkörper aus Polyolefinen wie Polyäthylen, Polypropylen, ferner aus Polyvinylchlorid, Polyvinylidenchlorid, aus Polycarbonaten, Polyurethanen und Polyestern wie beispielsweise Polyäthylenterephthalat oder aus Naturstoffen wie Holz und Baumwolle. Anorganische Partner können zum Beispiel Metalle wie Eisen, Stahl, Aluminium, Titan, Kupfer aber auch Nichtmetalle wie zum Beispiel Keramik oder Glas sein.

Die Form, Art und Oberflächenbeschaffenheit dieser zu verbindenden Formkörper kann naturgemäß verschieden sein. Bei flächigen Gebilden sind zu nennen Folien, Platten, Gewebe, Vliese, Filze.

Bei Einsatz von Geweben als Verbund-Partner können diese dicht gewebt oder auch offen sein, wie beispielsweise Gittergewebe, und aus

organischen, synthetischen oder auch anorganischen Fasern, zum Beispiel Glasfasern, bestehen. Solche Gittergewebe können zu vorteilhaften verstärkten Folienbahnen führen. Auf diese Weise ist es möglich, mechanisch hochwertige, wetterbeständige, schwer entflammbare und lichtdurchlässige Verbunde zu erzielen.

Die erfindungsgemäß herstellbaren Verbunde können auch einen mehrschichtigen Aufbau besitzen. Beispiele dafür sind beispielsweise Folien-Gewebe-Folienverbunde oder für Abdekkungen Metall-Folien-Metallverbunde, wie beispielsweise mit dünnen Kupferblechen für gedruckte Schaltkreise. Besonders wertvolle Verbunde für den Außeneinsatz können zwischen geformten Gebilden aus den genannten TFE/$\alpha$-Olefin-Mischpolymerisaten und vorbeschichteten organischen Geweben, wie beispielsweise mit Polyvinylchlorid oder Polyurethan beschichtete Polyester- oder Polyamid-Gewebe, erzielt werden. Diese können für Planen, Zelte oder Traglufthallen-Dächer Verwendung finden.

Zur Herstellung eines Verbundes nach dem erfindungsgemäßen Verfahren wird eine Lösung oder eine wäßrige Dispersion der oben beschriebenen elastomeren Mischpolymerisate aus VDF und HFP (und gegebenenfalls weiteren Monomeren) nach bekannten Methoden, wie beispielsweise Tauchen, Aufstreichen, Aufsprühen oder mittels Rollen oder Antragswerken auf die Oberflächen der zu verbindenden Formkörper oder auch nur auf die Oberfläche eines Verbund-Partners aufgebracht. Beim Aufbringen von Lösungen ist es in vielen Fällen ausreichend, die aufgebrachten Lösungen zur Entfernung des Lösungsmittels kurz abzulüften. Die Entfernung des Lösungsmittels kann jedoch auch zweckmäßigerweise durch Anwendung leicht erhöhter Temperaturen, je nach Flüchtigkeit des eingesetzten Lösungsmittels, beschleunigt werden. Es ist zweckmäßig, das Verbinden unter einem gewissen geringen Preßdruck vorzunehmen, der höchstens 10 bar beträgt.

Wenn die zur Erzielung der verklebenden Zwischenschicht eingesetzten Lösungen oder Dispersionen der elastomeren Mischpolymerisate aus Vinylidenfluorid/Hexafluorpropylen (und gegebenenfalls weiteren Monomeren) auch Vernetzungsmittel oder vernetzende Systeme enthalten, so ist in jedem Fall eine Nachbehandlung in der Wärme bei etwa 100 bis 250°C zweckmäßig.

Nach dem Verfahren der vorliegenden Erfindung ist es möglich, Formkörper aus Mischpolymerisaten von Tetrafluoräthylen mit $\alpha$-Olefinen und gegebenenfalls weiteren Monomeren ohne vorhergegangene chemische Vorbehandlung untereinander oder mit anderen Materialien zu verkleben, wobei dieses Verfahren den großen Vorteil hat, daß die verwendete Zwischenschicht zur Herstellung des Verbundes transparent ist und eine ausgezeichnete Beständigkeit gegenüber Lösungsmitteln, Chemikalien, Strahlung sowie hohe und tiefe Temperaturen aufweist. Die erhaltenen Verbundkörper zeichnen sich durch hohe mechanische Festigkeit, insbesondere durch eine hohe Zugscherfestigkeit aus.

Gegenstand der Erfindung sind auch Verbund-Formkörper, bestehend aus untereinander oder mit Formkörpern aus anderen Materialien verbundenen Formkörpern, geformt aus Mischpolymerisaten des Tetrafluoräthylens und $\alpha$-Olefinen und gegebenenfalls einer untergeordneten Menge anderer Monomerer, deren Verbund durch eine mittels Verklebung hergestellte Zwischenschicht bewirkt wird, die dadurch gekennzeichnet sind, daß die Zwischenschicht ein elastomeres Mischpolymerisat, bestehend aus 90 bis 40 Mol-% Vinylidenfluorid-Einheiten, 5 bis 60 Mol-% Hexafluorpropylen-Einheiten und 0 bis 35 Mol-% Einheiten eines oder mehrerer anderer Monomerer, ist.

Bezüglich der Zusammensetzung der Mischpolymerisate der zu verbindenden Formkörper und der als Zwischenschicht dienenden elastomeren Mischpolymerisate gelten hierfür die oben beschriebenen Einzelheiten und Vorzugsgrenzen.

Von den zahlreichen Anwendungsmöglichkeiten des erfindungsgemäßen Verfahrens bzw. der erfindungsgemäßen Verbund-Formkörper sei hier ferner noch der Einsatz von Folien aus den genannten Mischpolymerisaten von Tetrafluoräthylen mit $\alpha$-Olefinen (insbesondere mit Äthylen) zur Bildung festhaftender Überzüge auf Metall-Paneelen, zur Auskleidung von Behältern und Rohren sowie zum Aufbau mehrschichtiger Draht- und Kabelisolationen erwähnt.

Die Erfindung wird durch folgende Beispiele erläutert:

### Herstellen von Stammlösungen zum Aufbau der Verbundschichten

A) Stammlösung A

20 Gewichtsteile eines handelsüblichen VDF/HFP-Mischpolymerisates (75 Mol-% VDF, 25 Mol-% HFP) werden bei Raumtemperatur in 80 Gewichtsteilen eines Lösungsmittelgemisches aus 62,5 Gewichtsteilen Aceton, 125 Gewichtsteilen Äthylacetat und 250 Gewichtsteilen Isobutyläthylketon gelöst. Es wird eine mittelviskose Lösung mit einer Viskosität von 122 mPas/20°C erhalten.

B) Stammlösung B

Die Lösung wird gemäß A) mit einem Mischpolymerisat aus VDF/HFP/TFE (Molverhältnis 60 : 10 : 30; hergestellt entsprechend US-PS 2 968 649) zubereitet. Die Lösung besitzt eine Viskosität von 313 mPas/20°C.

C) Stammlösung C

Gemäß A) wird eine 10 gew.-%ige Lösung mit einem Mischpolymerisat aus VDF/HFP/TFE-Perfluorpropylvinyläther (Molverhältnis 65 : 8 : 25 : 2; hergestellt analog DE-OS 2 457 102) zubereitet. Die gemessene Viskosität betrug 260 mPas/20° C.

## Herstellung von Verbundkörpern

### Beispiel 1

#### Herstellung eines Folien-Folien-Verbundes

Als Ausgangsfolie dient eine aus einem Äthylen-Tetrafluoräthylen-Mischpolymerisat (ET/TFE; Molverhältnis 53 : 47) hergestellte Folie mit einem Schmelzpunkt von 275° C und einer Foliendicke von 100 µm.

Zwei 20 mm breite Folienstreifen werden einseitig mittels Rakel mit der Stammlösung A einseitig beschichtet und bei Raumtemperatur die Hauptmenge des Lösungsmittels soweit abgedampft (»abgelüftet«), bis die beschichtete Oberfläche bei Berührung nur noch geringfügigen klebrigen Charakter hat. Anschließend werden mittels eines Handrollers mit Gummiwalze, wie in der Fotoindustrie gebräuchlich, die beschichteten Oberflächen zusammengepreßt und der Verbund bei 50° C im Wärmeschrank 2 Stunden gelagert. Eine anschließend bestimmte Zugscherfestigkeit nach DIN-Norm 53 281 brachte einen Wert von 0,4 N/mm² / bei 23° C und 100 mm/min Abzug.

Der Verbund war transparent und flexibel.

### Beispiel 2

#### Herstellung eines Folien-Polyestergewebe-Verbundes

Ein handelsübliches Polyestergewebe mit einem Flächengewicht von 110 g/m², Leinenbindung 18/18 Fäden/cm Einstellung (Trevira® hochfest der Hoechst AG) werden mittels Antragsrolle einseitig mit der Stammlösung B beschichtet, desgleichen ein ET/TFE-Folienstück, wie beschrieben in Beispiel 1, von 100 µm Stärke. Nach kurzem Ablüften der beschichteten Oberflächen werden diese unter einer heizbaren Presse bei schwachem Anpreßdruck (ca. 0,2 bar) auf 150° C für 15 min gehalten und danach abgekühlt. Es wurde ein transluzenter, flexibler Verbund erhalten, die Haftung der Folie auf dem Gewebe betrug 0,4 N/mm² bei 23° C.

### Beispiel 3

#### Herstellung eines Folien-Glasgewebe-Folienverbundes

Ein handelsübliches dicht gewebtes Glasgewebe mit Leinenbindung und einem Flächengewicht von ca. 130 g/m² wird zunächst durch Tauchen mit der Stammlösung B beschichtet und das Lösungsmittelgemisch bei 50° C im Wärmeschrank entfernt. Dabei wird ein Flächenauftrag von ca. 35 g/m² erhalten.

Anschließend werden 2 Folienbahnen aus einer Folie, hergestellt aus einem Mischpolymerisat aus Äthylen/Tetrafluoräthylen/Hexafluorpropylen des Molverhältnisses 50 : 47 : 3, von 100 µm Stärke einseitig mittels Rakel mit Stammlösung B beschichtet und bei Raumtemperatur das Lösungsmittelgemisch weitgehend abgedampft. Die noch schwach feuchten Oberflächen werden nun auf beiden Oberflächen des vorbeschichteten Glasgewebes mittels Handroller aufgebracht und schließlich der Verbund im Zuschnitt DIN A 4 im Wärmeschrank bei 150° C unter schwachem Anpreßdruck (ca. 0,1 bar mittels aufgelegter Stahlplatte) von dem restlichen Lösungsmittel befreit. Der erhaltene Verbund zeigte eine Zugscherfestigkeit von 0,5—0,6 N/mm² bei 23° C.

### Beispiel 4

#### Herstellung eines Folien-Metallblech-Verbundes

Ein DIN-A 4-Zuschnitt eines handelsüblichen Aluminiumblechs mit 0,5 mm Stärke wird zunächst mittels Sandstrahlen auf eine Rauhtiefe von 5—10 µm gebracht. Anschließend wird die Oberfläche mittels Rakel mit der Stammlösung C dünn beschichtet, bei Raumtemperatur der Hauptanteil des Lösungsmittels entfernt und schließlich mittels Gummiwalze auf die beschichtete Oberfläche eine 100 µm ET/TFE-Folie (Mischpolymerisat 45 Mol-% ET, 55 Mol-% TFE), auflaminiert. Nach Trocknung des Verbundes über 24 Stunden bei Raumtemperatur wurde ein transparenter, festhaftender Überzug erhalten. Die gemessene Zugscherfestigkeit bei 23° C betrug 0,6 N/mm².

### Beispiel 5

#### Herstellung eines Folien-Folien-Verbundes mit chemischer Vernetzung

In 50 g der Stammlösung B werden unter Rühren 3 g Dicumylperoxid, 10 g Zinkoxid bei

Raumtemperatur eingerührt und mit dieser Lösung 2 plattenförmige Zuschnitte, hergestellt aus dem Mischpolymerisat ET/TFE gemäß Beispiel 1, einseitig dünn bestrichen und abgelüftet. Nach Zusammenfügen der beschichteten Oberfläche wird der Verbund in einer beheizbaren Plattenpresse zunächst 30 min bei 150°C behandelt. Danach wird der bereits gut haftende Verbund der Presse entnommen und im Umlufttrockenschrank 24 Stunden bei 200°C nachvernetzt.

Die bei dieser Arbeitsweise erhaltenen Zugscherfestigkeiten liegen mit Werten um 0,9—1 $N/mm^2$ merklich höher als bei der in Beispielen 1—4 aufgeführten Arbeitsweise.

**Patentansprüche**

1. Verfahren zur Herstellung von Verbunden aus Formkörpern, welche aus Mischpolymerisaten, bestehend aus Tetrafluoräthylen-Einheiten, Einheiten von $\alpha$-Olefinen und gegebenenfalls untergeordneten Mengen von Einheiten anderer Monomerer geformt worden sind, untereinander oder von solchen Formkörpern mit Formkörpern aus anderen Materialien mit Hilfe einer Zwischenschicht, dadurch gekennzeichnet, daß die Zwischenschicht aus einem elastomeren Mischpolymerisat, bestehend aus 90 bis 40 Mol-% Vinylidenfluorid-Einheiten, 5 bis 60 Mol-% Hexafluorpropylen-Einheiten und 0 bis 35 Mol-% Einheiten eines oder mehrerer anderer Monomerer, in Form einer Lösung oder Dispersion in einem flüssigen Medium auf die Oberfläche der zu verbindenden Formkörper aufgebracht, das flüssige Medium entfernt und, gegebenenfalls unter niedrigem Preßdruck, der Verbund hergestellt wird.

2. Verbund-Formkörper, bestehend aus untereinander oder mit Formkörper aus anderen Materialien verbundenen Formkörpern, welche aus Mischpolymerisaten des Tetrafluoräthylens und $\alpha$-Olefinen und gegebenenfalls einer untergeordneten Menge anderer Monomerer geformt worden sind und deren Verbund durch eine mittels Verklebung hergestellte Zwischenschicht bewirkt wird, dadurch gekennzeichnet, daß die Zwischenschicht ein elastomeres Mischpolymerisat, bestehend aus 90 bis 40 Mol-% Vinylidenfluorid-Einheiten, 5 bis 60 Mol-% Hexafluorpropylen-Einheiten und 0 bis 35 Mol-% Einheiten eines oder mehrerer anderer Monomerer, ist.

3. Verbund-Formkörper gemäß Anspruch 2, dadurch gekennzeichnet, daß die Zwischenschicht ein elastomeres Mischpolymerisat, bestehend aus 85 bis 50 Mol-% Vinylidenfluorid-Einheiten und 15 bis 50 Mol-% Hexafluorpropylen-Einheiten, ist.

4. Verbund-Formkörper gemäß Anspruch 2, dadurch gekennzeichnet, daß die Zwischenschicht ein elastomeres Mischpolymerisat, bestehend aus 80 bis 55 Mol-% Vinylidenfluorid-Einheiten und 20 bis 45 Mol-% Hexafluorpropylen-Einheiten ist.

5. Verbund-Formkörper nach Anspruch 2, dadurch gekennzeichnet, daß die Zwischenschicht ein elastomeres Mischpolymerisat, bestehend aus 50 bis 85 Mol-% Vinylidenfluorid-Einheiten, 5 bis 50 Mol-% Hexefluorpropylen-Einheiten und 0,1 bis 35 Mol-% Einheiten von bis zu zwei anderen Monomeren, ist.

6. Verbund-Formkörper gemäß Anspruch 2, dadurch gekennzeichnet, daß die Zwischenschicht ein elastomeres Mischpolymerisat, bestehend aus 55 bis 80 Mol-% Vinylidenfluorid-Einheiten, 5 bis 45 Mol-% Hexafluorpropylen-Einheiten und 0,1 bis 30 Mol-% Einheiten von bis zu zwei anderen Monomeren, ist.

7. Verbund-Formkörper gemäß Anspruch 5 und 6, dadurch gekennzeichnet, daß die Einheiten von bis zu zwei anderen Monomeren solche des Tetrafluoräthylens oder von Perfluor(alkylvinyl)-äthern mit Perfluoralkylresten von 1 bis 4 C-Atomen oder der Gemische dieser Monomeren sind.

8. Verbund-Formkörper gemäß Anspruch 2 bis 7, dadurch gekennzeichnet, daß die innerhalb des Verbund-Formkörpers verbundenen Formkörper aus Mischpolymerisaten von 65 bis 35 Mol-% Tetrafluoräthylen-Einheiten, 35 bis 65 Mol-% Äthylen-Einheiten und 0 bis 10 Mol-% Einheiten anderer Monomerer geformt worden sind.

**Claims**

1. A process for the manufacture of connections of shaped structures formed from copolymers containing units of tetrafluoroethylene, alpha-olefins and optionally small amounts of other monomers either connected with one another or connected with shaped articles formed from other materials, by means of an interlayer, which is characterised by applying an interlayer comprising an elastomeric copolymer containing from 90 to 40 mole% of vinylidene fluoride units, from 5 to 60 mole% of hexafluoropropylene units, and from 0 to 35 mole% of units of one or more other monomers to the surface of the shaped structures to be connected in the form of a solution or dispersion in a liquid medium, and removing the liquid medium whereby connecting the shaped structures, optionally under low pressure.

2. Composite structures comprising shaped structures formed from copolymeres of tetrafluoroethylene and alpha-olefins and optionally a small amount of other monomers and connected with one another or with shaped articles made from other materials, the connection between these shaped articles being produced by an adhesive interlayer, characterised in that the interlayer comprises an elastomeric copolymer containing from 90 to 40 mole% of vinylidene fluoride units, from 5 to 60 mole% of hexafluoropropylene units and from 0 to 35 mole% of units of one or more other monomers.

3. Composite structures as claimed in claim 2, characterised in that the interlayer is an elastomeric copolymer containing from 85 to 50 mole% of vinylidene fluoride units, and from 15 to 50 mole% of hexafluoropropylene units.

4. Composite structures as claimed in claim 2, characterised in that the interlayer is an elastomeric copolymer containing from 80 to 55 mole% of vinylidene fluoride units, and from 20 to 45 mole% of hexafluoropropylene units.

5. Composite structures as claimed in claim 2, characterised in that the interlayer is an elastomeric copolymer containing from 55 to 85 mol% of vinylidene fluoride units, from 5 to 50 mole% of hexafluoropropylene units and from 0.1 to 35 mole% of units of up to two other monomers.

6. Composite structures as claimed in claim 2, characterised in that the interlayer is an elastomeric copolymer containing from 55 to 80 mole% of vinylidene fluoride units, from 5 to 45 mole% of hexafluoropropylene units and from 0.1 to 30 mole% of units of up to two other monomers.

7. Composite structures as claimed in claims 5 and 6, characterised in that the units of the other monomers are those of tetrafluoroethylene or of perfluoro(alkylvinyl) ethers containing perfluoroalkyl radicals having from 1 to 4 carbon atoms, or of mixtures thereof.

8. Composite structures as claimed in claims 2 to 7, characterised in that the shaped structures to be connected are formed of copolymers containing from 65 to 35 mole% of tetrafluoroethylene units, from 35 to 65 mole% of ethylene units and from 0 to 10 mole% of units of other monomers.

## Revendications

1. Procédé pour fabriquer des assemblages d'objets moulés qui ont eux-mêmes été fabriqués à partir de copolymères constitués de motifs de tétrafluoréthylène, de motifs d'α-oléfines et éventuellement de motifs d'autres monomères, ces objets moulés étant assemblés entre eux ou avec des objets moulés constitués d'autres matières, au moyen d'une couche intermédiaire, procédé caractérisé en ce qu'on applique sur la surface des objets moulés à assembler une couche intermédiaire à base d'un copolymère élastomère constitué de 90 à 40% en moles de motifs de fluorure de vinylidène, de 5 à 60% en moles de motifs d'hexafluoropropène et de 0 à 35% en moles de motifs d'un ou de plusieurs autres monomères, sous la forme d'une solution ou d'une dispersion dans un milieu liquide, on chasse le milieu liquide et, éventuellement en opérant sous une faible pression de contact, on fabrique l'assemblage.

2. Objets moulés composites constitués d'objets moulés, unis entre eux ou à des objets moulés en d'autres matières, qui ont été fabriques par moulage de copolymères du tétrafluoréthylène et d'α-oléfines et éventuellement d'une moindre quantité d'autres monomères et dont l'union est réalisée par une couche intermédiaire créée par collage, ces objets moulés composites étant caractérisés en ce que la couche intermédiaire est en un copolymère élastomère constitué de 90 à 40% en moles de motifs de fluorure de vinylidène, de 5 à 60% en moles de motifs d'hexafluoropropène et de 0 à 35% en moles de motifs d'un ou plusieurs autres monomères.

3. Objets moulés composites selon la revendication 2, caractérisés en ce que la couche intermédiaire est en un copolymère élastomère constitué de 85 à 50% en moles de motifs de fluorure de vinylidène et de 15 à 50% en moles de motifs d'hexafluoropropène.

4. Objets moulés composites selon la revendication 2, caractérisés en ce que la couche intermédiaire est en un copolymère constitué de 80 à 55% en moles de motifs de fluorure de vinylidène et de 20 à 45% en moles de motifs d'hexafluoropropène.

5. Objets moulés composites selon la revendication 2, caractérisés en ce que la couche intermédiaire est en un copolymère élastomère constitué de 50 à 85% en moles de motifs de fluorure de vinylidène, de 5 à 50% en moles de motifs d'hexafluoropropène et de 0,1 à 35% en moles de motifs d'un ou deux autres monomères.

6. Objets moulés composites selon la revendication 2, caractérisés en ce que la couche intermédiaire est en un copolymère élastomère constitué de 55 à 80% en moles de motifs de fluorure de vinylidène, de 5 à 45% en moles de motifs d'hexafluoropropène et de 0,1 à 30% en moles de motifs d'un ou deux autres monomères.

7. Objets moulés composites selon l'une des revendications 5 et 6, caractérisés en ce que les motifs de l'autre ou des deux autres monomères sont des motifs du tétrafluoréthylène ou d'un oxyde de perfluoroalkyle et de perfluorovinyle dont le radical perfluoroalkyle contient de 1 à 4 atomes de carbone, ou de mélanges de ces monomères.

8. Objets moulés composites selon l'une quelconque des revendications 2 à 7, caractérisés en ce que les objets moulés qui sont unis à l'intérieur de l'objet moulé composite ont été fabriqués par moulage de copolymères constitués de 65 à 35% en moles de motifs de tétrafluoréthylène, de 35 à 65% en moles de motifs d'éthylène et de 0 à 10% en moles de motifs d'autres monomères.